# EUROPEAN PATENT SPECIFICATION

(11) **EP 4 101 122 B1**
(45) Date of publication and mention of the grant of the patent: **08.11.2023**
(21) Application number: 21709821.9
(22) Date of filing: 05.02.2021
(51) Int. Cl.: H04L 9/00, H04L 9/32

(54) **GENERATING EMOJI SEQUENCE IDENTIFICATIONS TO IDENTIFY WALLET ADDRESSES FOR BLOCKCHAIN WALLETS**
ERZEUGEN VON EMOJI-SEQUENZKENNZEICHNUNGEN ZUM IDENTIFIZIEREN VON WALLET-ADRESSEN FÜR BLOCKCHAIN-WALLETS
GÉNÉRATION D'IDENTIFICATIONS DE SÉQUENCES D'ÉMOTICÔNES POUR IDENTIFIER DES ADRESSES DE PORTEFEUILLES POUR DES PORTEFEUILLES DE CHAÎNE DE BLOCS

(30) Priority: 07.02.2020 US 202062971666 P
(43) Date of publication of application: 14.12.2022
(73) Proprietor: Emoji ID, LLC, Oakland, CA 94612 (US)
(72) Inventor: JAIN, Naveen, Oakland, CA 94612 (US); SPAGNI, Riccardo, 2191 Johannesburg (ZA)
(74) Representative: Barker Brettell LLP
(86) International application number: PCT/US2021/016868
(87) International publication number: WO 2021/158953

(56) References cited:
- ALSHAMSI ABDULLA ET AL: "User perception of Bitcoin usability and security across novice users", INTERNATIONAL JOURNAL OF HUMAN-COMPUTER STUDIES, vol. 126, June 2019 (2019-06), pages 94-110, XP085656006, ISSN: 1071-5819, DOI: 10.1016/J.IJHCS.2019.02.004
- NANCY J CARTER: "Graphical Passwords for Older Computer Users", USER INTERFACE SOFTWARE & TECHNOLOGY, ACM, 2 PENN PLAZA, SUITE 701 NEW YORK NY 10121-0701 USA, 6 November 2015 (2015-11-06), pages 29-32, XP058075086, DOI: 10.1145/2815585.2815593 ISBN: 978-1-4503-3780-9

## Description

### CROSS-REFERENCE TO RELATED APPLICATIONS

This application claims the benefit of U.S. Provisional Application No. 62/971,666, filed February 7, 2020.

### FIELD OF THE DISCLOSURE

The present disclosure relates generally to generating emoji sequence identifications (IDs) and in particular generating emoji sequence IDs to identify wallet addresses for blockchain wallets.

### BACKGROUND OF THE DISCLOSURE

Public and private keys are an integral component of cryptocurrencies built on blockchain networks and are part of a larger field of cryptography known as public-key cryptography (PKC) or asymmetric encryption. The goal of PKC is to easily transition from a first state (e.g., a private key) to a second state (e.g., a public key) while reversing the transition from the second state to the first state nearly impossible, and in the process, proving possession of a secret key without exposing that secret key. The product is subsequently a one-way mathematical function, which makes it ideal for validating the authenticity of transactions such as cryptocurrency transactions because possession of the first state such as the secret key cannot be forged. PKC relies on a two-key model, the public and private key.

The general purpose of PKC is to enable secure, private communication using digital signatures in a public channel that is susceptible to potentially malicious eavesdroppers. In the context of cryptocurrencies, the goal is to prove that a spent transaction was indeed signed by the owner of the funds, and was not forged, all occurring over a public blockchain network between peers. A private key of a blockchain wallet unlocks the right for the blockchain wallet's owner to spend cryptocurrency funds in the blockchain wallet and therefore must remain private. A wallet address of the blockchain wallet is cryptographically linked to the blockchain wallet's private key and is publicly available to all users to enable other users to send cryptocurrencies to the user's blockchain wallet. For example, the wallet address may be a public key generated from the blockchain wallet's private key using one or more PKC algorithms.

Wallet addresses for blockchain wallets are typically represented in human-legible form in one of three ways: as a hexadecimal representation, as a Base64 representation, or as a Base58 representation. In each of these common ways of representing the wallet addresses, each wallet address is represented using a string of letters and numbers, typically exceeding 20 characters in length. The length and randomness of the alphanumeric string makes the wallet address unwieldy and difficult to remember, thereby decreasing its usability and hindering the adoption of cryptocurrencies.

A. Abdulla et al: "User perception of Bitcoin usability and security across novice users" discloses several usability issues affecting Bitcoin, including the difficulty to remember wallet addresses.

N.J. Carter: "Graphical Passwords for Older Computer Users" discloses representing passwords using emojis in order to assist elderly users in memorizing them.

### BRIEF SUMMARY OF THE DISCLOSURE

As described above, wallet addresses are conventionally represented in human-legible form as a long string of letters and numbers, which is hard for users to remember and prone to error when entered by users to transact cryptocurrencies. Accordingly, there exists a need for systems and methods to generate non-textual representations for blockchain wallets. In some embodiments, emoji sequence IDs to identify wallet addresses can be generated for blockchain wallets to reduce the drawbacks associated with conventional alphanumeric representations of wallet addresses. An emoji sequence ID includes a sequence of emojis that uniquely identifies a wallet address. Not only does each emoji in the emoji sequence represent multiple characters of a wallet address, thus shortening the representation of the wallet address, but also emojis are easier for the user to remember. Therefore, the emoji sequence ID may serve as a mnemonic emoji string that helps the user more easily remember the user's wallet address.

In some embodiments, a method for generating an emoji sequence identification (ID) identifying a wallet address of a blockchain wallet comprises: receiving the wallet address for the blockchain wallet, the wallet address comprising a predetermined number of bits; dividing the predetermined number of bits of the wallet address into a plurality of non-overlapping groups of sequential bits; converting each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenating the emoji ID for each group of sequential bits into an emoji sequence; and outputting the emoji sequence ID identifying the wallet address based on the emoji sequence.

In some embodiments of the method, the list of emojis is stored as a list of corresponding Unicode characters. In some embodiments of the method, the list of emojis comprises a plurality of emojis selected from a Unicode Standard.

In some embodiments of the method, the plurality of emojis are associated with a plurality of corresponding values. In some embodiments, the plurality of emojis are stored in an array and the plurality of values are a plurality of corresponding indices of the array.

In some embodiments of the method, each group of sequential bits corresponds to a number that is converted to a predefined number of values corresponding to the predetermined number of emojis in the emoji representation.

In some embodiments of the method, the plurality of emojis comprises a plurality of sets of emojis that are pictorially similar, and wherein each set of emojis that is pictorially similar is assigned an associated value. In some embodiments, a set of emojis that is pictorially similar include a plurality of emojis that depict types of the same object.

In some embodiments of the method, the predetermined number of bits of the wallet address comprises a checksum represented by a predefined portion of the wallet address.

In some embodiments, a method of deriving a wallet address for a blockchain wallet based on an emoji sequence identification (ID) identifying the wallet address comprises: receiving the emoji sequence ID identifying the wallet address, the emoji sequence ID comprising an emoji sequence having a predetermined number of emojis; dividing the predetermined number of emojis of the emoji sequence into a plurality of non-overlapping groups of sequential emojis; converting each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying a plurality of values corresponding to a plurality of emojis in each group based on the predetermined list of emojis, wherein each emoji in each group of emojis corresponds to an emoji from the predetermined list of emojis, and generating a number corresponding to the textual representation based on the plurality of identified values; and concatenating the textual representation for each group of sequential emojis into a sequence of textual representations that identifies the wallet address.

In some embodiments of the method, receiving the emoji sequence ID comprises: receiving a QR code corresponding to the wallet address; deriving the emoji sequence from the QR code; and displaying the emoji sequence as the emoji sequence ID of the wallet address, wherein displaying the wallet address as the emoji sequence enables a user to pictorially verify the wallet address.

In some embodiments of the method, receiving the emoji sequence ID comprises: receiving the emoji sequence from a clipboard storing copied objects.

In some embodiments of the method, a predefined portion of the emoji sequence corresponds to a checksum for verifying the emoji sequence ID, and the method comprises: extracting the predefined portion from the emoji sequence to generate a resultant emoji sequence, wherein the predefined portion comprises one or more emojis; converting the predefined portion into a checksum value based on the predetermined list of emojis; applying a checksum algorithm to calculate a value for the wallet address based on the resultant sequence of emojis; and determining whether the calculated value matches the checksum value.

In some embodiments of the method, in response to determining that the calculated value does not match the checksum value, the method includes generating a notification indicating that the emoji sequence ID for the wallet address is invalid.

In some embodiments, a system for generating an emoji sequence identification (ID) identifying a wallet address of a blockchain wallet comprises: one or more processors; memory comprising a local storage; and one or more programs, wherein the one or more programs are stored in the memory and configured to be executed by the one or more processors, the one or more programs including instructions that cause the one or more processors to: receive the wallet address for the blockchain wallet, the wallet address comprising a predetermined number of bits; divide the predetermined number of bits of the wallet address into a plurality of non-overlapping groups of sequential bits; convert each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenate the emoji ID for each group of sequential bits into an emoji sequence; and output the emoji sequence ID identifying the wallet address based on the emoji sequence.

In some embodiments, a non-transitory computer-readable storage medium comprises one or more programs for generating an emoji sequence identification (ID) identifying a wallet address of a blockchain wallet, wherein the one or more programs, when executed by one or more processors, cause the one or more processors to perform operations comprising: receiving the wallet address for the blockchain wallet, the wallet address comprising a predetermined number of bits; dividing the predetermined number of bits of the wallet address into a plurality of non-overlapping groups of sequential bits; converting each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenating the emoji ID for each group of sequential bits into an emoji sequence; and outputting the emoji sequence ID identifying the wallet address based on the emoji sequence.

In some embodiments, a system for deriving a wallet address for a blockchain wallet based on an emoji sequence identification (ID) identifying the wallet address comprises: one or more processors; memory comprising a local storage; and one or more programs, wherein the one or more programs are stored in the memory and configured to be executed by the one or more processors, the one or more programs including instructions that cause the one or more processors to: receive the emoji sequence ID identifying the wallet address, the emoji sequence ID comprising an emoji sequence having a predetermined number of emojis; divide the predetermined number of emojis of the emoji sequence into a plurality of non-overlapping groups of sequential emojis; convert each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying a plurality of values corresponding to a plurality of emojis in each group based on the predetermined list of emojis, wherein each emoji in each group of emojis corresponds to an emoji from the predetermined list of emojis, and generating a number corresponding to the textual representation based on the plurality of identified values; and concatenate the textual representation for each group of sequential emojis into a sequence of textual representations that identifies the wallet address.

In some embodiments, a non-transitory computer-readable storage medium comprises one or more programs for deriving a wallet address for a blockchain wallet based on an emoji sequence identification (ID) identifying the wallet address, wherein the one or more programs, when executed by one or more processors, cause the one or more processors to perform operations comprising: receiving the emoji sequence ID identifying the wallet address, the emoji sequence ID comprising an emoji sequence having a predetermined number of emojis; dividing the predetermined number of emojis of the emoji sequence into a plurality of non-overlapping groups of sequential emojis; converting each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying a plurality of values corresponding to a plurality of emojis in each group based on the predetermined list of emojis, wherein each emoji in each group of emojis corresponds to an emoji from the predetermined list of emojis, and generating a number corresponding to the textual representation based on the plurality of identified values; and concatenating the textual representation for each group of sequential emojis into a sequence of textual representations that identifies the wallet address.

### BRIEF DESCRIPTION OF THE DRAWINGS

The present disclosure will now be described, by way of example only, with reference to the accompanying drawings, in which:
FIG. 1 illustrates a block diagram of a system for using emoji sequence identifications (IDs) for identifying wallet addresses of blockchain wallets, according to some embodiments;
FIG. 2 illustrates a flowchart of a method for generating an emoji sequence ID identifying a wallet address of a blockchain wallet, according to some embodiments;
FIG. 3 illustrates a flowchart of a method for deriving a wallet address for a blockchain wallet based on an emoji sequence ID identifying the wallet address, according to some embodiments;
FIGS. 4-12 show various screens of a graphical user interface for transacting cryptocurrencies using emoji sequence IDs to represent wallet addresses of blockchain wallets, according to some embodiments; and
FIG. 13 illustrates an example of a computer, according to some embodiments.

### DETAILED DESCRIPTION OF THE DISCLOSURE

In the following description of the various embodiments, reference is made to the accompanying drawings, in which are shown, by way of illustration, specific embodiments that can be practiced. The description is presented to enable one of ordinary skill in the art to make and use the invention and is provided in the context of a patent application and its requirements. Various modifications to the described embodiments will be readily apparent to those persons skilled in the art and the generic principles herein may be applied to other embodiments. Thus, the present invention is not intended to be limited to the embodiment shown but is to be accorded the widest scope consistent with the principles and features described herein.

As used herein, the singular forms "a," "an," and "the" used in the following description are intended to include the plural forms as well unless the context clearly indicates otherwise. It is to be understood that the term "and/or" as used herein refers to and encompasses any and all possible combinations of one or more of the associated listed items. It is further to be understood that the terms "includes," "including," "comprises," and/or "comprising," when used herein, specify the presence of stated features, integers, steps, operations, elements, components, and/or units but do not preclude the presence or addition of one or more other features, integers, steps, operations, elements, components, units, and/or groups thereof.

Certain aspects of the present invention include process steps and instructions described herein in the form of a method. It should be noted that the process steps and instructions of the present invention could be embodied in software, firmware, or hardware, and, when embodied in software, they could be downloaded to reside on, and be operated from, different platforms used by a variety of operating systems. Unless specifically stated otherwise as apparent from the following discussion, it is appreciated that, throughout the description, discussions utilizing terms such as "processing," "computing," "calculating," "determining," "displaying," or the like refer to the action and processes of a computer system, or similar electronic computing device, that manipulates and transforms data represented as physical (electronic) quantities within the computer system memories or registers or other such information storage, transmission, or display devices.

The present disclosure in some embodiments also relates to a device for performing the operations herein. This device may be specially constructed for the required purposes, or it may comprise a general purpose computer selectively activated or reconfigured by a computer program stored in the computer. Such a computer program may be stored in a non-transitory, computer readable storage medium, such as, but not limited to, any type of disk, including floppy disks, USB flash drives, external hard drives, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The methods, devices, and systems described herein are not inherently related to any particular computer or other apparatus. Various general-purpose systems may also be used with programs in accordance with the teachings herein, or it may prove convenient to construct a more specialized apparatus to perform the required method steps. The required structure for a variety of these systems will appear from the description below. In addition, the present invention is not described with reference to any particular programming language. It will be appreciated that a variety of programming languages may be used to implement the teachings of the present invention as described herein.

As discussed above, wallet addresses for blockchain wallets are typically represented as long strings of random alphanumeric characters that are difficult to remember and prone to entry mistakes by users. Therefore, it would be advantageous to represent a wallet address for a blockchain wallet in a pictorial representation such as an emoji sequence identification (ID) that uniquely identifies the wallet address, as will be further described below.

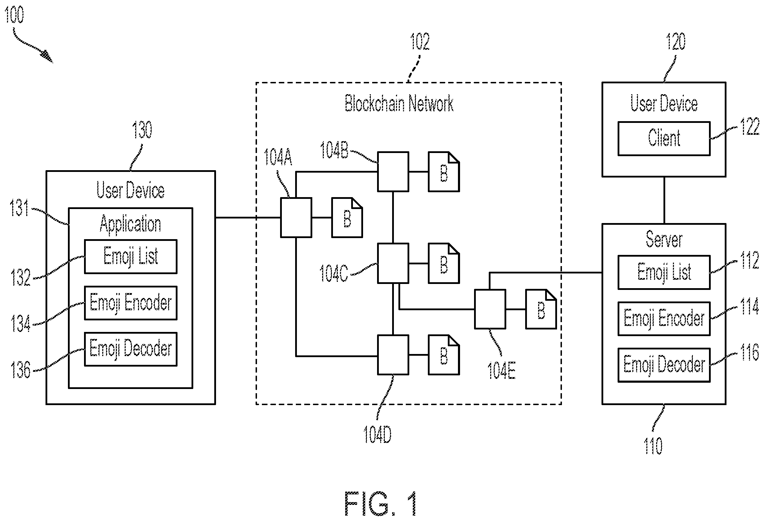

FIG. 1 illustrates a block diagram of a system 100 for using emoji sequence IDs for identifying wallet addresses of blockchain wallets, according to some embodiments. System 100 includes a blockchain network 102, user device 120, user device 130, and server 110.

As shown in FIG. 1, blockchain network 102 includes a plurality of nodes 104A-E (e.g., servers) that each maintain respective copies of a blockchain. In actual practice, blockchain network 102 may include hundreds or thousands of nodes. In some embodiments, blockchain network 102 may be a distributed peer-to-peer network as is known by those skilled in the art. In some embodiments, blockchain network 102 of nodes 104A-E implement known consensus algorithms to validate transactions submitted to blockchain network 102. A verified transaction may include transferred cryptocurrency, contracts, records, or other information to be recorded to the blockchain. In some embodiments, multiple transactions are combined together into a block of data that is verified across blockchain network 102. Once verified, this block of data can be added to an existing blockchain maintained by each of nodes 104A-E.

In some embodiments, a user can initiate transactions to be submitted to blockchain network 102 using user device 130. For example, the user may submit a transaction using application 131 configured to interact with blockchain network 102. For example, application 131 may generate and transmit cryptocurrency transactions to node 104A for validation and verification. Application 131 may include software downloaded from a digital distribution platform (e.g., App Store on Apple devices or Microsoft Store on Windows devices) or a content server. In some embodiments, application 131 provides a graphical user interface (GUI) that enables the user to generate transactions between his or her blockchain wallet and a blockchain wallet of a target recipient of cryptocurrency funds. Conventionally, the target recipient's blockchain wallet is identified by a wallet address in a human-legible textual representation. For example, the wallet address may be a string of numbers and/or characters such as in a hex format, a Base64 format, or a Base58 format. As described above, requiring the user to enter long strings of numbers and/or characters into application 131 to identify the wallet address of the target recipient is inefficient and prone to error.

In some embodiments, to enable the user to use an emoji sequence ID to uniquely identify a target wallet address for a blockchain wallet in cryptocurrency transactions, application 131 can implement an emoji list 132, an emoji encoder 134, and an emoji decoder 136.

In some embodiments, emoji list 132 can be stored in memory of application 131 and include a predetermined list of emojis that are used to enable use of emoji sequence IDs to identify wallet addresses of blockchain wallets. In some embodiments, the predetermined list includes a subset of emojis selected from the emojis in the Unicode Standard. For example, emoji list 132 may include 1626 emojis selected from the Unicode Standard. In some embodiments, 1626 emojis are selected because three emojis selected from 1626 emojis can uniquely map to a four-byte value. For example, an emoji ID of three emojis selected from 1626 emojis may include 1626^3 unique emoji IDs, which is less than 0.1% more unique values than the total possible number of unique values (i.e., 2^32) that can be represented by the four-byte (i.e., 32-bit) value. As will be understood by those skilled in the art, other numbers of emojis may be selected to be part of emoji list 132 to represent different number of bits. For example, an emoji list 132 having 46 emojis can represent an 11-bit value using two emojis (i.e., two emojis result in 46*46 = 2116 unique emoji IDs, which provides slightly more unique values than the possible values, 2048, of an 11-bit value).

In some embodiments, emojis in emoji list 132 may be selected to be visually dissimilar to reduce the likelihood that the user enters an incorrect emoji when entering the emoji sequence ID identifying the wallet address of the blockchain wallet. For example, the emojis may be selected such that no two emojis depict the slight variations of the same object. For example, a single emoji for a cat may be selected and included in emoji list 132 and not the multiple emojis depicting cats with different expression (e.g., grinning cat, cat with tears of joy, and pouting cat, etc.).

In some embodiments, to permit conversion between emoji IDs and integer values, emoji list 132 includes a plurality of emojis associated with a plurality of corresponding values. In some embodiments, emoji list 132 can be stored as an array, in which each emoji in the array has a corresponding index based on its position in the array. Therefore, each value associated with an emoji may be an index assigned to the emoji. In other embodiments, emoji list 132 may include a table that stores a plurality of emojis and that stores a plurality of values corresponding to the plurality of emojis. In these embodiments, emojis in emoji list 132 that are pictorially similar may be associated with the same value. In some embodiments, a set of emojis that is pictorially similar can include a plurality of emojis that depict types of the same object. For example, emoji list 132 may include multiple flag emojis that are each assigned an associated value of, for example, 9.

In some embodiments, application 131 can include an emoji mapping list that maps a larger number of emojis to the emojis in emoji list 132. For example, the emoji mapping list may include all available emojis in the Unicode Standard (i.e., 3,304 emojis as of January 2020). In some embodiments, by selecting mapping emojis to emojis in emoji list 132, two or more emojis that are pictorially similar may be mapped to the same emoji. For example, two or more emojis that show a clock depicting different types may be mapped to the same emoji of a clock. The use of an emoji mapping list may normalize the possible emojis to a list of emojis that are selected to be visually distinct to reduce error during user entry as well as to enhance the ease of visually verifying entered emoji sequence IDs.

In some embodiments, emoji encoder 134 can be configured to generate an emoji sequence ID that uniquely identifies a wallet address, which includes a predetermined number of bits (e.g., a 128-bit address or a 256-bit address). In other words, emoji encoder 134 can encode the wallet address into a sequence of emojis such that every wallet address is uniquely represented by exactly one sequence of emojis. Further, a valid emoji sequence ID represents exactly one wallet address. The encoding and decoding functions performed by emoji encoder 134 and emoji decoder 136, respectively, are symmetric functions. This means that encoding a wallet address, *a*, to its emoji sequence ID, *s*, and then applying the decoding function to emoji sequence ID, *s*, will always result in the originally encoded wallet address, *a.*

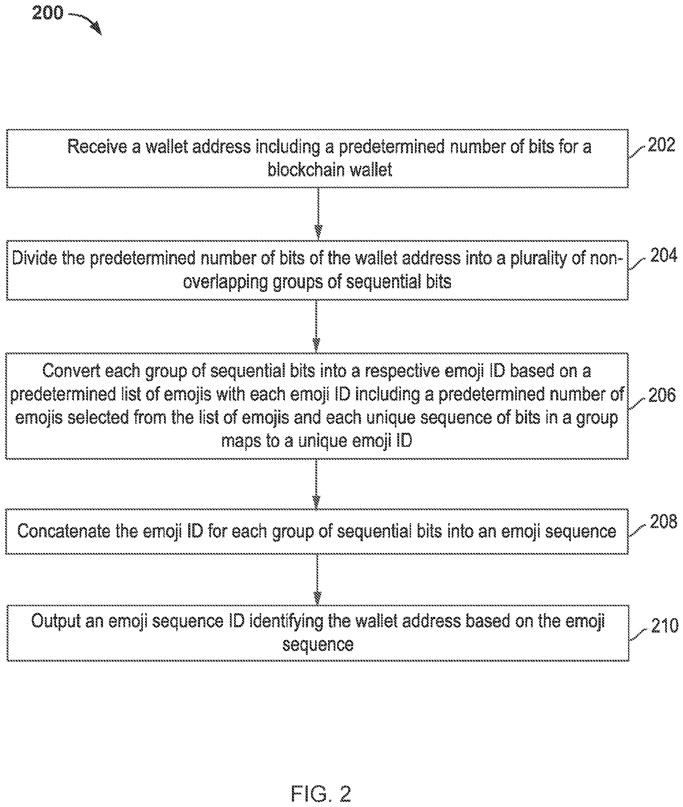

In some embodiments, to generate the emoji sequence ID, emoji encoder 134 can map a predetermined number of bits of the wallet address to a predetermined number of emojis selected from emoji list 132, as will be further described below with respect to FIG. 2. In some embodiments, the predetermined number of bits of the wallet address can be divided into a plurality of non-overlapping groups of sequential bits. For example, the wallet address may be divided into 4-byte chunks. Then, emoji encoder 134 can convert each group of sequential bits into an emoji ID including a predetermined number of emojis based on emoji list 132. Finally, emoji encoder 134 can generate the emoji sequence ID identifying the wallet address by concatenating each emoji ID for each group of sequential bits into an emoji sequence.

In some embodiments, emoji encoder 134 can implement a mapping algorithm to convert the wallet address into the emoji sequence ID. For example, the mapping algorithm may include a BIP39 algorithm, an Electrum scheme algorithm, or a simple mapping from emoji index to a 10-bit value for emoji list 132 having at least 1024 emojis. In some embodiments, emoji encoder 134 can implement a mapping algorithm that uses indices of emojis in emoji list 132 to convert a numeric value to a predetermined number of emojis.

In some embodiments, to generate the emoji sequence ID, emoji encoder 134 may calculate a checksum value for the emoji sequence. For example, emoji encoder 134 may apply a checksum algorithm such as the Damm algorithm to calculate the checksum value. Then, emoji encoder 134 may convert the checksum value into an emoji representation including a predetermined number of emojis. Finally, emoji encoder 134 may output the emoji sequence ID identifying the wallet address by appending the emoji representation for the checksum to the emoji sequence previously calculated.

In some embodiments, emoji decoder 136 can be configured to generate a wallet address, which includes a predetermined number of bits (e.g., a 128-bit address or a 256-bit address), that is uniquely identified by an emoji sequence ID. In other words, emoji decoder 136 can decode the emoji sequence ID identifying the wallet address into a sequence of textual representations that uniquely corresponds to the wallet address. In some embodiments, the textual representation can correspond to an alphanumeric format for the wallet address that is required by blockchain network 102 to process cryptocurrency transactions. For example, the sequence of textual representations may be a hexadecimal string, a Base64 string, or a Base 58 string.

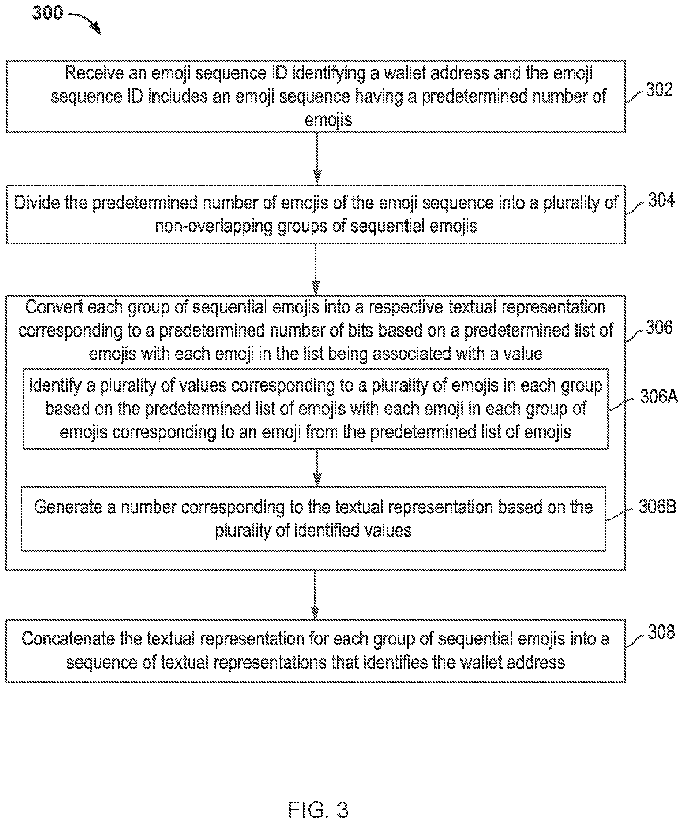

In some embodiments, to generate the sequence of textual representations that identifies the wallet address, emoji decoder 136 can map the sequence of emojis in the emoji sequence ID to a numerical value identifying the wallet address based on emoji list 132, as will be further described below with respect to FIG. 3. In some embodiments, emoji decoder 136 can determine the numerical value using emoji list 132 to identify a plurality of values corresponding to the plurality of emojis in the emoji sequence ID. For example, for an emoji in the emoji sequence ID, emoji decoder 136 may use an index of the emoji identified in emoji list 132 as a value associated with the emoji to be used in generating the numerical value. In some embodiments, emoji decoder 136 can convert a generated numerical value into the sequence of textual representations that uniquely identifies the wallet address.

In some embodiments, emoji decoder 136 can apply a checksum algorithm on the emoji sequence ID to determine whether the emoji sequence ID is valid. For example, emoji decoder 136 may apply the checksum algorithm to check whether the last emoji in the emoji sequence ID matches a result of the checksum algorithm applied to the emoji sequence ID excluding the last emoji. As described above with respect to emoji encoder 134, the last emoji may be generated to represent a checksum value of the emoji sequence ID. In some embodiments, if the checksum fails, emoji decoder 136 can halt processing because emoji sequence ID is invalid. In some embodiments, emoji decoder 136 can generate a notification indicating that the sequence ID is invalid.

In some embodiments, one or more emoji checksum can be extracted from the emoji sequence ID to generate a resultant emoji sequence. In some embodiments, the resultant emoji sequence can be divided into a plurality of non-overlapping groups of sequential emojis. For example, for an emoji list 132 having 1626 emojis, the result emoji sequence may be divided into groups of 3 emojis, with each group representing a 4-byte value. Then, emoji decoder 136 can convert each group of sequential emojis into a textual representation including a predetermined number of bits based on emoji list 132. Finally, emoji decoder 136 can generate the sequence of textual representations identifying the wallet address by concatenating each textual representation for each group of sequential emojis.

In some embodiments, functionality of application 131 may be performed elsewhere in system 100 such as on one or more of nodes 104A-E in blockchain network 102. In these embodiments, blockchain network 102 can be configured to be capable of processing transactions in which wallet addresses are identified using emoji sequence IDs. In some embodiment, an emoji sequence ID is a sequence of a plurality of emojis.

In some embodiments, functionality of application 131 may be performed elsewhere in system 100 such as on server 110. For example, server 110 includes emoji list 112, emoji encoder 114, and emoji decoder 116, which provides similar functionality as emoji list 132, emoji encoder 134, and emoji decoder 136, respectively. In some embodiments, server 110 may be a web server that enables users to operate a client 122 on user device 120 to access the functions of server 110. For example, client 122 may be a browser that enables the user to connect to a web portal or interface provided by server 110. Therefore, a user using user device 120 may initiate transactions to be verified by and added to blockchain network 102 via server 110.

FIG. 2 illustrates a flowchart of a method 200 for generating an emoji sequence ID identifying a wallet address of a blockchain wallet, according to some embodiments. In some embodiments, method 200 can be performed by an encoder such as emoji encoder 134 and emoji encoder 114, as described above with respect to FIG. 1.

In step 202, the encoder receives a wallet address including a predetermined number of bits for a blockchain wallet. For example, wallet addresses used in popular cryptocurrencies such as Bitcoin, Litecoin, and Ethereum are 160-bit values. In some embodiments, the wallet address is generated based on a public/private ECDSA key pair. For example, the wallet address may be hash value generated from a public key portion of the public/private key pair. In some embodiments, one or more hash algorithms can be applied in a chained series to generate the wallet address. An example series is Algorithm X11, which includes a chain of 11 different hash algorithms. Examples of the one or more hash algorithms may include any of the following types of algorithms: Message Digest (e.g., MD, MD2, MD4, MD5, and MD6), RIPEMD (e.g., RIPEND, RIPEMD-128, RIPEMD-160), Whirlpool (Whirlpool-0, Whirlpool-T, and Whirlpool), or Secure Hash Function (e.g., SHA-0, SHA-1, SHA-2, SHA-3). In the cryptocurrency space, SHA-256 (i.e., an example of a SHA-2 algorithm) is a commonly used hash algorithm.

In step 204, the encoder divides the predetermined number of bits of the wallet address into a plurality of non-overlapping groups of sequential bits. In some embodiments, the bits of the wallet address are evenly divided into the plurality of groups. Therefore, each group may include the same number of sequential bits.

In step 206, the encoder converts each group of sequential bits into a respective emoji ID based on a predetermined list of emojis with each emoji ID including a predetermined number of emojis selected from the list of emojis and each unique sequence of bits in a group mapping to a unique emoji ID. In some embodiments, the encoder can convert the group into a plurality of index values that correspond to a plurality of corresponding emojis from the predetermined list.

In some embodiments, the encoder can implement an Electrum-based scheme to convert each group of sequential bits to the respective emoji ID. For example, for an emoji list of length 1626 where the emojis have an index from 0 to 1625, the wallet address can be evenly divided into groups of 32-bits or four-byte chunks. Therefore, for wallet address represented as a 32-byte (i.e., 256-bit) integer, the wallet address would be evenly divided into 8 groups of 4-bytes (i.e., 32 bits). In some embodiments, the encoder can implement the following steps to generate the emoji ID: assign the value of the 4-byte integer corresponding to the group to x; determine a first index i_1 as *x* % 1626; determine a second index i_2 as (*x*/1626 + i_1) % 1626 where x/1626 is performed as integer division where remainders are ignored; determine a third index i_3 as (*x*/(1626^{∗}1626) + i_2) % 1626; look up the emojis corresponding to the first, second, and third indices from the predetermined list; and concatenate the looked-up emojis into the emoji ID.

In step 208, the encoder concatenates the emoji ID for each group of sequential bits into an emoji sequence. In some embodiments, the emoji sequence includes a predetermined number of emojis.

In step 210, the encoder outputs an emoji sequence ID identifying the wallet address based on the emoji sequence. In some embodiments, the emoji sequence ID includes the emoji sequence. In some embodiments, the encoder can be configured to generate a checksum value based on the wallet address and convert the checksum value into an emoji. In these embodiments, the emoji sequence ID can include the emoji sequence concatenated with the checksum emoji.

FIG. 3 illustrates a flowchart of a method 300 for deriving a wallet address for a blockchain wallet based on an emoji sequence ID identifying the wallet address, according to some embodiments. In some embodiments, method 300 can be performed by a decoder such as emoji decoder 136 and emoji decoder 116, as described above with respect to FIG. 1.

In step 302, the decoder receives an emoji sequence ID identifying a wallet address and the emoji sequence ID includes an emoji sequence having a predetermined number of emojis. For example, an emoji sequence ID that represents a 256-bit wallet address may include an emoji sequence of 24 emojis. In some embodiments, one or more emojis in the emoji sequence may represent a checksum for the wallet address. For example, an emoji sequence ID that represents a 256-bit wallet address may include an emoji sequence of 25 emojis in which the last emoji represents a checksum corresponding to the first 24 emojis in the emoji sequence.

In step 304, the decoder divides the predetermined number of emojis of the emoji sequence into a plurality of non-overlapping groups of sequential emojis. In some embodiments, each group of sequential emojis include the same predetermined number of emojis. In some embodiments where the emoji sequence ID includes one or more emojis representing a checksum, the emojis sequence represents the emoji sequence ID having the one or more emojis for the checksum being extracted.

In step 306, the decoder converts each group of sequential emojis into a respective textual representation corresponding to a predetermined number of bits based on a predetermined list of emojis with each emoji in the list being associated with a value. In some embodiments, a textual representation may be a numeric representation, a hexadecimal representation, a binary representation, or an alphanumeric representation such as a Base64 format, etc. In some embodiments, step 306 can include steps 306A-B.

In step 306A, the decoder identifies a plurality of values corresponding to a plurality of emojis in each group based on the predetermined list of emojis with each emoji in each group of emojis corresponding to an emoji from the predetermined list of emojis.

In step 306B, the decoder generates a number corresponding to the textual representation based on the plurality of identified values.

In some embodiments, the decoder can implement an Electrum-based scheme to convert each group of sequential emojis into the number corresponding to the textual representation. For example, for an emoji list of length *n* (e.g., 1626) where the emojis have an index from 0 to 1625, the emoji sequence ID can be evenly divided into groups of 3 emojis representing 4-byte values. Therefore, for an emoji sequence ID having 25 emojis with an emoji being used for checksum, the 24 non-checksum emojis would be evenly divided into 8 groups of three emojis. In some embodiments, the decoder can implement the following steps to generate the number for each group of three emojis: set a first value v_1 to an index of the first emoji identified from the predetermined list of emojis; set a second value v_2 to an index of the second emoji identified from the predetermined list of emojis; set a third value v_3 to an index of the third emoji identified from the predetermined list of emojis; and calculate the number, *x*, by applying the following formula: *x* = v_1 + *n*^{∗}((v_2 - v_1)%*n*) + *n*^{∗}*n*((v_3 - v_2)%*n*). In some embodiments, the number can be converted to a textual representation such as, for example, a hexadecimal representation.

In step 308, the decoder concatenates the textual representation for each group of sequential emojis into a sequence of textual representations that identifies the wallet address. In some embodiments, the sequence of textual representations may be a string of numbers or alphanumeric characters. For example, the sequence of textual representations may be a hexadecimal representation, a binary representation, or a Base64 representation. In some embodiments, the decoder can be configured to convert the sequence of textual representations into a different format such as a Base58 representation. In some embodiments, the textual representations may be a format required to be included in a transaction submitted to a blockchain network.

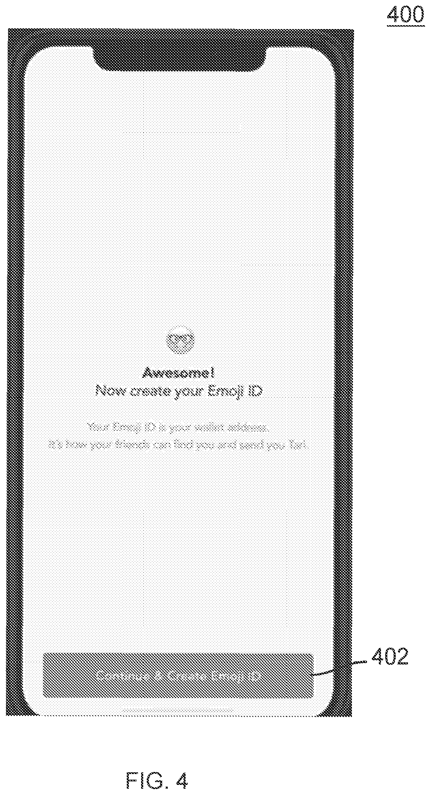

FIGS. 4-12 are diagrams that illustrate respective example screens 400-1200 of a graphical user interface (GUI) for transacting cryptocurrencies using emoji sequence IDs to represent wallet addresses of blockchain wallets, according to some embodiments. In some embodiments, the GUI for displaying screens 400-1200 may be provided by an application (e.g., application 130) or a client 122 (e.g., client 122) installed on a user device to enable users to initiate blockchain transactions.

FIG. 4 illustrates an example screen 400 displayed by the GUI to prompt a user to create an emoji sequence ID for the user's blockchain wallet, according to some embodiments. Once the user selects continue button 402, the GUI can be configured to generate the emoji sequence ID that identifies the wallet address of the user's blockchain wallet.

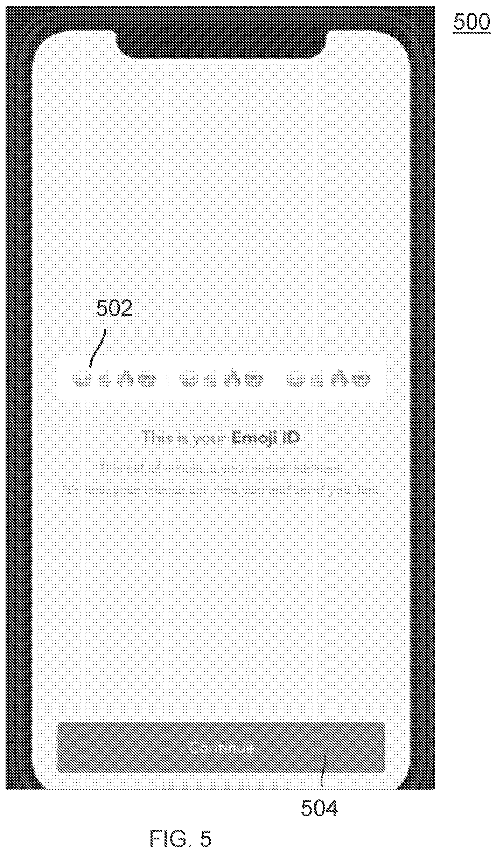

FIG. 5 illustrates an example screen 500 displayed by the GUI after the user requests an emoji sequence ID to be generated, as described with respect to FIG. 4. As shown in screen 500, the GUI can display a generated emoji sequence ID in portion 502. Portion 502 shows an example emoji sequence ID that may be generated. In some embodiments, the GUI displays a continue button 504 that upon the user's selection will cause the GUI to enable the user to initiate blockchain transactions using the user's wallet address as identified in portion 502.

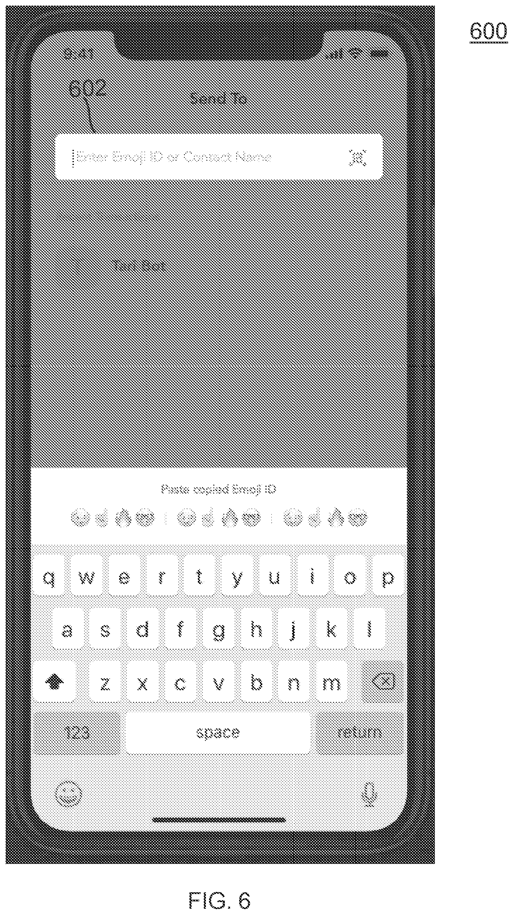

FIG. 6 illustrates an example screen 600 displayed by the GUI to enable the user to enter an emoji sequence ID that identifies a blockchain wallet of a target user to send cryptocurrency to the target user. In some embodiments, the entered emoji sequence ID may identify a wallet address of the target user's blockchain wallet. The user may type each emoji in the emoji sequence ID into field 602. As described above with respect to FIG. 1, by displaying the target user's wallet address as the emoji sequence ID, the GUI reduces the entry burden of the user and also reduces the likelihood of mistakes when entering a conventional alphanumeric wallet address.

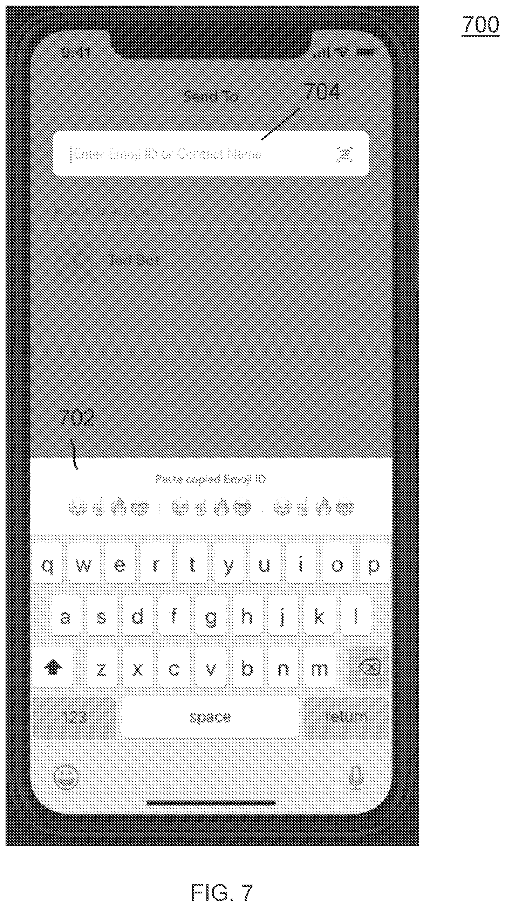

FIG. 7 illustrates an example screen 700 displayed by the GUI that shows another method by which the GUI permits the user to enter the target user's emoji sequence ID. As shown in FIG. 7, the GUI permits the user to copy emoji sequence ID 702 to be pasted in field 704 corresponding to field 602 of screen 600. In other embodiments, the GUI can enable the user to take a picture of a QR code and the GUI may be configured to extract the target user's emoji sequence ID from the QR code. In another embodiment, the GUI can enable the user to enter a hyperlink to the target user's emoji sequence ID.

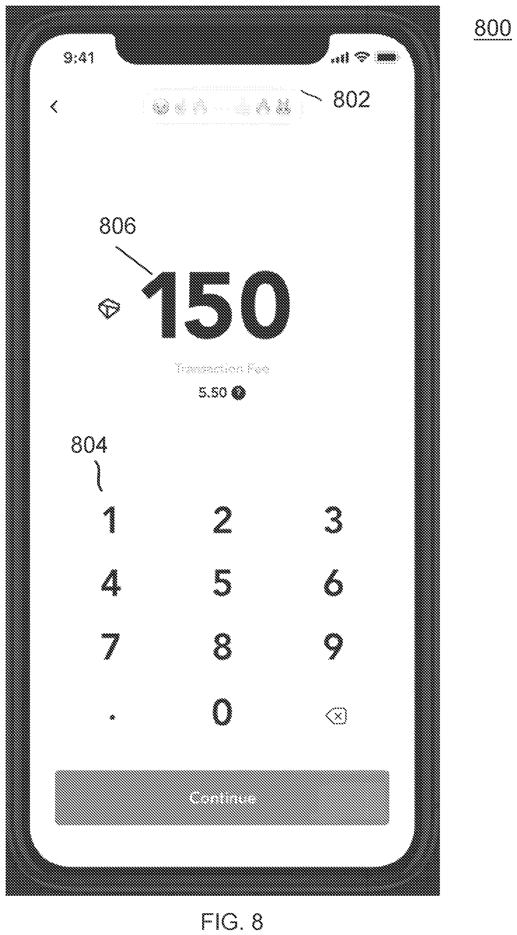

FIG. 8 illustrates an example screen 800 displayed by the GUI that shows how the user is permitted to generate a cryptocurrency transaction after the user enters the target user's emojis sequence ID, as described above with respect to FIGS. 6 and 7. In some embodiments, screen 800 shows a graphical element 802 that depicts the target user's emoji sequence ID that identifies the target user's blockchain wallet. The GUI enables the user to enter an amount 806 of cryptocurrency to be transferred to the target user's blockchain wallet using a keypad interface 804.

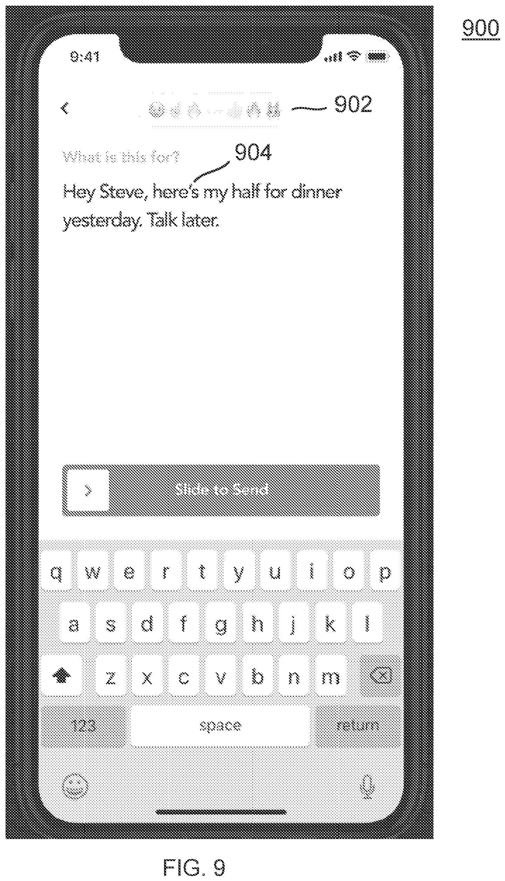

FIG. 9 illustrates an example screen 900 displayed by the GUI that enables the user to enter a description 904 of a cryptocurrency transaction to the target user's blockchain wallet identified by the emoji sequence ID shown in portion 902. For example, description 904 indicates that the target user is 'Steve' and that the requested transaction of 150 units of cryptocurrency (as shown in FIG. 8) is for dinner. After the user enters description 904, the user may select a send button to complete the requested transaction.

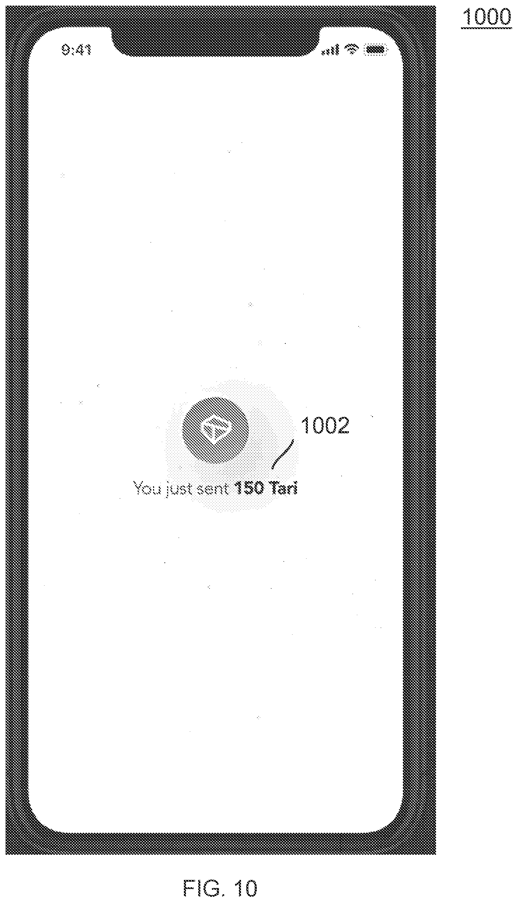

FIG. 10 illustrates an example screen 1000 displayed by the GUI to show a transaction confirmation 1002 for the user that has sent cryptocurrencies to the target user's emoji sequence ID. In some embodiments, the application operating the GUI may generate and transmit a blockchain transaction to a blockchain network such as blockchain network 102 for verification. In some embodiments, prior to transmitting the blockchain transaction, the application (e.g., emoji decoder 136) may convert the emoji sequence ID identifying the target user's wallet address into a sequence of textual representations that can be processed by the blockchain network. For example, the sequence of textual representations may be a string of hexadecimal characters, a string of Base58 characters, a string of Base64 characters, etc.

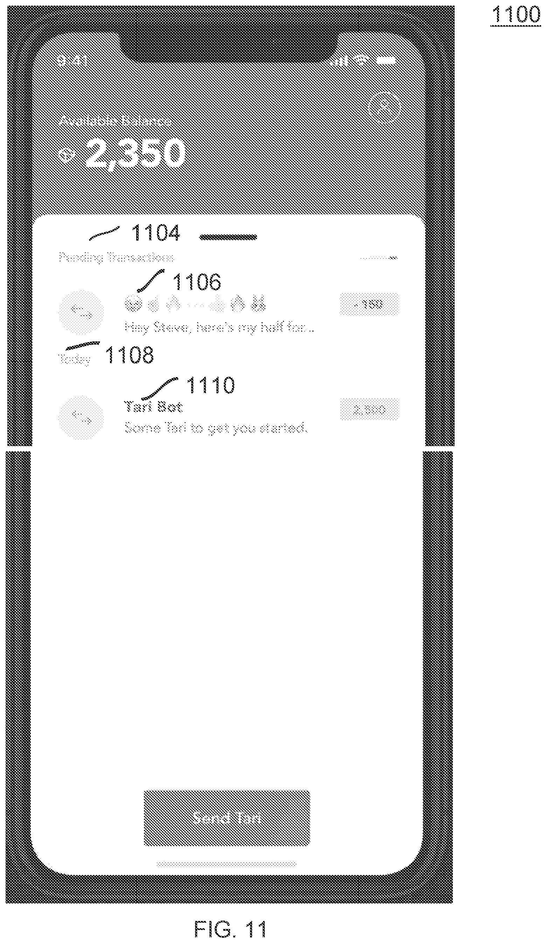

FIG. 11 illustrates an example screen 1100 displayed by the GUI to show pending transactions 1104 and completed transactions 1108 to the user. As shown in FIG. 11, screen 1100 shows that the cryptocurrency transaction to the target user wallet identified by emoji sequence ID 1106, as described above with respect to FIGS. 7-10, remains pending. Screen 1100 also shows completed transactions 1108 including a transaction in which the user received 2500 units of cryptocurrencies by a user with name 'Tari Bot'. Additionally, screen 1100 may display an available balance 1102 of units of cryptocurrencies based on pending transactions 1104 and completed transactions.

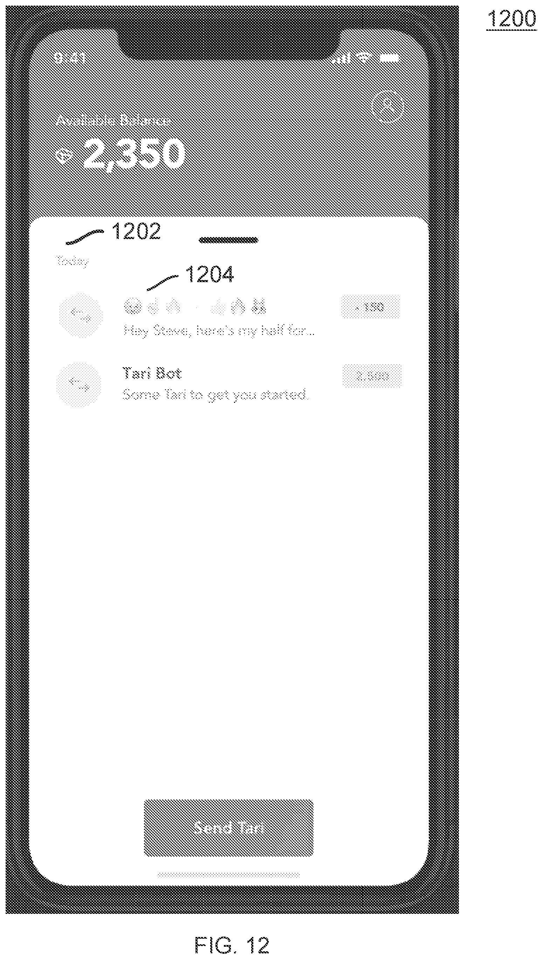

In some embodiments, once the blockchain network verifies and adds transactions to the blockchain, the GUI can be configured to update pending transactions 1104. For example, FIG. 12 illustrates an example screen 1200 displayed by the GUI that shows that completed transactions 1202 includes a transaction to the target user's blockchain wallet identified by emoji sequence ID 1204 that was previously pending.

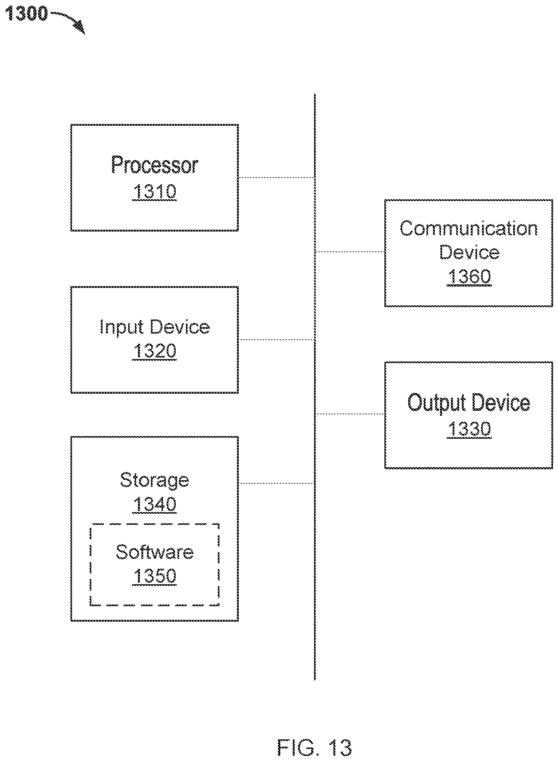

FIG. 13 illustrates an example of a computing device 1300, according to some embodiments. Device 1300 can be a host computing device connected to a network. For example, device 1300 may be an example implementation of one or more of a server 110, a user device 120, a user device 130, and one or more of nodes 104A-E, described above with respect to FIG. 1. Device 1300 can be a client computer or a server. As shown in FIG. 13, device 1300 can be any suitable type of microprocessor-based device, such as a personal computer, work station, or server. The device can include, for example, one or more of processor 1310, input device 1320, output device 1330, storage 1340, and communication device 1360. Input device 1320 and output device 1330 can generally correspond to those described above and can either be connectable or integrated with the computing device.

Input device 1320 can be any suitable device that provides input, such as a touchscreen, keyboard or keypad, mouse, or voice-recognition device. Output device 1330 can be any suitable device that provides output, such as a touchscreen, haptics device, or speaker.

Storage 1340 can be any suitable device that provides storage, such as an electrical, magnetic, or optical memory including a RAM, cache, hard drive, or removable storage disk. Communication device 1360 can include any suitable device capable of transmitting and receiving signals over a network, such as a network interface chip or device. The components of the computing device can be connected in any suitable manner, such as via a physical bus, or wirelessly.

Software 1350, which can be stored in storage 1340 and executed by processor 1310, can include, for example, the programming that embodies the functionality of the present disclosure (e.g., as embodied in the devices described above). For example, software 1350 may include system software (e.g., an operating system), application software, or security software.

Software 1350 can also be stored and/or transported within any non-transitory, computer-readable storage medium for use by or in connection with an instruction execution system, apparatus, or device, such as those described above, that can fetch instructions associated with the software from the instruction execution system, apparatus, or device and execute the instructions. In the context of this disclosure, a computer-readable storage medium can be any medium, such as storage 1340, that can contain or store programming for use by or in connection with an instruction-execution system, apparatus, or device.

Software 1350 can also be propagated within any transport medium for use by or in connection with an instruction-execution system, apparatus, or device, such as those described above, that can fetch instructions associated with the software from the instruction-execution system, apparatus, or device and execute the instructions. In the context of this disclosure, a transport medium can be any medium that can communicate, propagate, or transport programming for use by or in connection with an instruction-execution system, apparatus, or device. The transport readable medium can include, but is not limited to, an electronic, magnetic, optical, electromagnetic, or infrared wired or wireless propagation medium.

Device 1300 may be connected to a network, which can be any suitable type of interconnected communication system. The network can implement any suitable communications protocol and can be secured by any suitable security protocol. The network can comprise network links of any suitable arrangement that can implement the transmission and reception of network signals, such as wireless network connections, T1 or T3 lines, cable networks, DSL, or telephone lines.

Device 1300 can implement any operating system suitable for operating on the network. Software 1350 can be written in any suitable programming language, such as C, C++, Java, or Python. In various embodiments, application software embodying the functionality of the present disclosure can be deployed in different configurations, such as in a client/server arrangement, for example.

The foregoing description, for purpose of explanation, has made reference to specific embodiments. However, the illustrative discussions above are not intended to be exhaustive or to limit the disclosure to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments, with various modifications, that are suited to the particular use contemplated.

Although the disclosure and examples have been fully described with reference to the accompanying figures, it is to be noted that various changes and modifications will be apparent to those skilled in the art. Such changes and modifications are to be understood as being included within the scope of the disclosure and examples as defined by the claims.

The scope of protection is defined by the claims.

## Claims

1. A method for generating an emoji sequence identification (ID) identifying a wallet address of a blockchain wallet, comprising: receiving (202) the wallet address for the blockchain wallet, the wallet address comprising a predetermined number of bits; dividing (204) the predetermined number of bits of the wallet address into a plurality of non-overlapping groups of sequential bits; converting (206) each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenating (208) the emoji ID for each group of sequential bits into an emoji sequence; and outputting (210) the emoji sequence ID identifying the wallet address based on the emoji sequence

2. The method of claim 1, wherein the list of emojis is stored as a list of corresponding Unicode characters.

3. The method of claim 1, wherein the list of emojis comprises a plurality of emojis selected from a Unicode Standard.

4. The method of claim 1, wherein the plurality of emojis are associated with a plurality of corresponding values.

5. The method of claim 4, wherein the plurality of emojis are stored in an array and the plurality of values are a plurality of corresponding indices of the array; or
wherein each group of sequential bits corresponds to a number that is converted to a predefined number of values corresponding to the predetermined number of emojis in the emoji representation.

6. The method of claim 3, wherein the plurality of emojis comprises a plurality of sets of emojis that are pictorially similar, and wherein each set of emojis that is pictorially similar is assigned an associated value; and, optionally or preferably,
wherein a set of emojis that is pictorially similar include a plurality of emojis that depict types of the same object.

7. The method of claim 1, wherein the predetermined number of bits of the wallet address comprises a checksum represented by a predefined portion of the wallet address.

8. A method of deriving a wallet address for a blockchain wallet based on an emoji sequence identification (ID) identifying the wallet address, comprising: receiving (302) the emoji sequence ID identifying the wallet address, the emoji sequence ID comprising an emoji sequence having a predetermined number of emojis; dividing (304) the predetermined number of emojis of the emoji sequence into a plurality of non-overlapping groups of sequential emojis; converting (306) each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying (306A) a plurality of values corresponding to a plurality of emojis in each group based on the predetermined list of emojis, wherein each emoji in each group of emojis corresponds to an emoji from the predetermined list of emojis, and generating (306B) a number corresponding to the textual representation based on the plurality of identified values; and concatenating (308) the textual representation for each group of sequential emojis into a sequence of textual representations that identifies the wallet address.

9. The method of claim 8, wherein receiving the emoji sequence ID comprises: receiving a QR code corresponding to the wallet address; deriving the emoji sequence from the QR code; and displaying the emoji sequence as the emoji sequence ID of the wallet address, wherein displaying the wallet address as the emoji sequence enables a user to pictorially verify the wallet address.

10. The method of claim 8, wherein receiving the emoji sequence ID comprises: receiving the emoji sequence from a clipboard storing copied objects.

11. The method of claim 8, wherein a predefined portion of the emoji sequence corresponds to a checksum for verifying the emoji sequence ID, and wherein the method comprises: extracting the predefined portion from the emoji sequence to generate a resultant emoji sequence, wherein the predefined portion comprises one or more emojis; converting the predefined portion into a checksum value based on the predetermined list of emojis; applying a checksum algorithm to calculate a value for the wallet address based on the resultant sequence of emojis; and determining whether the calculated value matches the checksum value; and, optionally or preferably.
comprising: in response to determining that the calculated value does not match the checksum value, generating a notification indicating that the emoji sequence ID for the wallet address is invalid.

12. A system for generating an emoji sequence identification (ID) identifying a wallet address of a blockchain wallet, comprising: one or more processors; memory comprising a local storage; and one or more programs, wherein the one or more programs are stored in the memory and configured to be executed by the one or more processors, the one or more programs including instructions that cause the one or more processors to: receive (202) the wallet address for the blockchain wallet, the wallet address comprising a predetermined number of bits; divide (204) the predetermined number of bits of the wallet address into a plurality of non overlapping groups of sequential bits; convert (206) each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenate (208) the emoji ID for each group of sequential bits into an emoji sequence; and output (210) the emoji sequence ID identifying the wallet address based on the emoji sequence.

13. A non-transitory computer-readable storage medium comprising one or more programs for generating an emoji sequence identification (ID) identifying a wallet address of a blockchain wallet, wherein the one or more programs, when executed by one or more processors, cause the one or more processors to perform operations comprising: receiving (202) the wallet address for the blockchain wallet, the wallet address comprising a predetermined number of bits; dividing (204) the predetermined number of bits of the wallet address into a plurality of non-overlapping groups of sequential bits; converting (206) each group of sequential bits into a respective emoji ID based on a predetermined list of emojis, wherein the emoji ID comprises a predetermined number of emojis selected from the list of emojis, and wherein each unique sequence of bits in a group maps to a unique emoji ID; concatenating (208) the emoji ID for each group of sequential bits into an emoji sequence; and outputting (210) the emoji sequence ID identifying the wallet address based on the emoji sequence.

14. A system for deriving a wallet address for a blockchain wallet based on an emoji sequence identification (ID) identifying the wallet address, comprising: one or more processors; memory comprising a local storage; and one or more programs, wherein the one or more programs are stored in the memory and configured to be executed by the one or more processors, the one or more programs including instructions that cause the one or more processors to: receive (302) the emoji sequence ID identifying the wallet address, the emoji sequence ID comprising an emoji sequence having a predetermined number of emojis; divide (304) the predetermined number of emojis of the emoji sequence into a plurality of non-overlapping groups of sequential emojis; convert (306) each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying (306A) a plurality of values corresponding to a plurality of emojis in each group based on the predetermined list of emojis, wherein each emoji in each group of emojis corresponds to an emoji from the predetermined list of emojis, and generating (306B) a number corresponding to the textual representation based on the plurality of identified values; and concatenate (308) the textual representation for each group of sequential emojis into a sequence of textual representations that identifies the wallet address.

15. A non-transitory computer-readable storage medium comprising one or more programs for deriving a wallet address for a blockchain wallet based on an emoji sequence identification (ID) identifying the wallet address, wherein the one or more programs, when executed by one or more processors, cause the one or more processors to perform operations comprising: receiving (302) the emoji sequence ID identifying the wallet address, the emoji sequence ID comprising an emoji sequence having a predetermined number of emojis; dividing (304) the predetermined number of emojis of the emoji sequence into a plurality of non-overlapping groups of sequential emojis; converting (306) each group of sequential emojis into a respective textual representation corresponding to a predetermined number of bits based on a predetermined list of emojis, wherein each emoji in the list is associated with a value, wherein each unique sequence of emojis in a group of emojis maps to a unique number, and wherein the converting comprises: identifying (306A) a plurality of values corresponding to a plurality of emojis in each group based on the predetermined list of emojis, wherein each emoji in each group of emojis corresponds to an emoji from the predetermined list of emojis, and generating (306B) a number corresponding to the textual representation based on the plurality of identified values; and concatenating (308) the textual representation for each group of sequential emojis into a sequence of textual representations that identifies the wallet address.

## Patentansprüche

1. Verfahren zum Erzeugen einer Emoji-Sequenz-Identifikation (ID), die eine Wallet-Adresse einer Blockchain-Wallet identifiziert, umfassend:
Empfangen (202) der Wallet-Adresse für die Blockchain-Wallet, wobei die Wallet-Adresse eine vorbestimmte Anzahl von Bits umfasst; Aufteilen (204) der vorbestimmten Anzahl von Bits der Wallet-Adresse in eine Mehrzahl von nicht überlappenden Gruppen von sequenziellen Bits;
Umwandeln (206) jeder Gruppe von sequenziellen Bits in eine jeweilige Emoji-ID basierend auf einer vorbestimmten Liste von Emojis, wobei die Emoji-ID eine vorbestimmte Anzahl von Emojis umfasst, die aus der Liste von Emojis ausgewählt sind, und wobei jede eindeutige Bitfolge in einer Gruppe auf eine eindeutige Emoji-ID mappt;
Verketten (208) der Emoji-ID für jede Gruppe von sequenziellen Bits zu einer Emoji-Sequenz; und
Ausgeben (210) der Emoji-Sequenz-ID, die die Wallet-Adresse basierend auf der Emoji-Sequenz identifiziert.

2. Verfahren nach Anspruch 1, wobei die Liste der Emojis als Liste der entsprechenden Unicode-Zeichen gespeichert wird.

3. Verfahren nach Anspruch 1, wobei die Liste der Emojis eine Mehrzahl von Emojis umfasst, die aus einem Unicode-Standard ausgewählt sind.

4. Verfahren nach Anspruch 1, wobei die Mehrzahl von Emojis einer Mehrzahl von entsprechenden Werten zugeordnet ist.

5. Verfahren nach Anspruch 4, wobei die Mehrzahl von Emojis in einem Array gespeichert ist und die Mehrzahl von Werten eine Mehrzahl von entsprechenden Indizes des Arrays sind; oder
wobei jede Gruppe von sequenziellen Bits einer Zahl entspricht, die in eine vordefinierte Anzahl von Werten umgewandelt wird, die der vorbestimmten Anzahl von Emojis in der Emoji-Repräsentation entsprechen.

6. Verfahren nach Anspruch 3, wobei die Mehrzahl von Emojis eine Mehrzahl von Sätzen von Emojis umfasst, die bildlich ähnlich sind, und wobei jedem Satz von Emojis, der bildlich ähnlich ist, ein zugeordneter Wert zugewiesen wird; und, optional oder bevorzugt,
wobei ein Satz von Emojis, der bildlich ähnlich ist, eine Mehrzahl von Emojis beinhaltet, die Typen des gleichen Objekts zeigen.

7. Verfahren nach Anspruch 1, wobei die vorbestimmte Anzahl von Bits der Wallet-Adresse eine Prüfsumme umfasst, die durch einen vordefinierten Teil der Wallet-Adresse repräsentiert wird.

8. Verfahren zum Ableiten einer Wallet-Adresse für eine Blockchain-Wallet basierend auf einer Emoji-Sequenz-Identifikation (ID), die die Wallet-Adresse identifiziert, umfassend:
Empfangen (302) der Emoji-Sequenz-ID;
Identifizieren der Wallet-Adresse, wobei die Emoji-Sequenz-ID eine Emoji-Sequenz mit einer vorbestimmten Anzahl von Emojis umfasst;
Aufteilen (304) der vorbestimmten Anzahl von Emojis der Emoji-Sequenz in eine Mehrzahl von nicht überlappenden Gruppen von sequenziellen Emojis;
Umwandeln (306) jeder Gruppe von sequenziellen Emojis in eine jeweilige Textrepräsentation, die einer vorbestimmten Anzahl von Bits basierend auf einer vorbestimmten Liste von Emojis entspricht, wobei jedes Emoji in der Liste einem Wert zugeordnet ist, wobei jede eindeutige Sequenz von Emojis in einer Gruppe von Emojis auf eine eindeutige Zahl mappt, und wobei das Umwandeln umfasst:
Identifizieren (306A) einer Mehrzahl von Werten entsprechend einer Mehrzahl von Emojis in jeder Gruppe basierend auf der vorbestimmten Liste von Emojis, wobei jedes Emoji in jeder Gruppe von Emojis einem Emoji aus der vorbestimmten Liste von Emojis entspricht, und
Erzeugen (306B) einer Zahl, die der Textrepräsentation basierend auf der Mehrzahl der identifizierten Werte entspricht; und
Verketten (308) der Textrepräsentation für jede Gruppe von sequenziellen Emojis zu einer Sequenz von Textrepräsentationen, die die Wallet-Adresse identifiziert.

9. Verfahren nach Anspruch 8, wobei das Empfangen der Emoji-Sequenz-ID umfasst:
Empfangen eines QR-Codes, der der Wallet-Adresse entspricht; Ableiten der Emoji-Sequenz aus dem QR-Code; und
Anzeigen der Emoji-Sequenz als Emoji-Sequenz-ID der Wallet-Adresse, wobei das Anzeigen der Wallet-Adresse als Emoji-Sequenz es einem Benutzer ermöglicht, die Wallet-Adresse bildlich zu verifizieren.

10. Verfahren nach Anspruch 8, wobei das Empfangen der Emoji-Sequenz-ID umfasst: Empfangen der Emoji-Sequenz aus einer Zwischenablage, in der kopierte Objekte gespeichert sind.

11. Verfahren nach Anspruch 8, wobei ein vordefinierter Teil der Emoji-Sequenz einer Prüfsumme zum Verifizieren der Emoji-Sequenz-ID entspricht, und wobei das Verfahren umfasst:
Extrahieren des vordefinierten Teils aus der Emoji-Sequenz, um eine resultierende Emoji-Sequenz zu erzeugen,
wobei der vordefinierte Teil ein oder mehrere Emojis umfasst;
Umwandeln des vordefinierten Teils in einen Prüfsummenwert basierend auf der vorbestimmten Liste von Emojis;
Anwenden eines Prüfsummenalgorithmus, um einen Wert für die Wallet-Adresse basierend auf der resultierenden Sequenz von Emojis zu berechnen; und
Bestimmen, ob der berechnete Wert mit dem Prüfsummenwert übereinstimmt; und, optional oder bevorzugt, umfassend:
als Reaktion auf das Bestimmen, dass der berechnete Wert nicht mit dem Prüfsummenwert übereinstimmt,
Erzeugen einer Benachrichtigung, die angibt, dass die Emoji-Sequenz-ID für die Wallet-Adresse ungültig ist.

12. System zum Erzeugen einer Emoji-Sequenz-Identifikation (ID), die eine Wallet-Adresse einer Blockchain-Wallet identifiziert, umfassend:
einen oder mehrere Prozessoren; einen Speicher, der einen lokalen Speicherplatz umfasst; und
ein oder mehrere Programme, wobei das eine oder mehrere Programme in dem Speicher gespeichert und dazu ausgelegt sind, von dem einen oder mehreren Prozessoren ausgeführt zu werden, wobei das eine oder mehrere Programme Anweisungen beinhalten, die den einen oder mehrere Prozessoren dazu veranlassen:
die Wallet-Adresse für die Blockchain-Wallet zu empfangen (202), wobei die Wallet-Adresse eine vorbestimmte Anzahl von Bits umfasst;
die vorbestimmte Anzahl von Bits der Wallet-Adresse in eine Mehrzahl von nicht überlappenden Gruppen von sequenziellen Bits aufzuteilen (204);
jede Gruppe von sequenziellen Bits in eine jeweilige Emoji-ID, basierend auf einer vorbestimmten Liste von Emojis, umzuwandeln (206), wobei die Emoji-ID eine vorbestimmte Anzahl von Emojis umfasst, die aus der Liste von Emojis ausgewählt sind, und wobei jede eindeutige Bitfolge in einer Gruppe auf eine eindeutige Emoji-ID mappt;
die Emoji-ID für jede Gruppe von sequenziellen Bits zu einer Emoji-Sequenz zu verketten (208); und
die Emoji-Sequenz-ID, die die Wallet-Adresse basierend auf der Emoji-Sequenz identifiziert, auszugeben (210).

13. Nichtflüchtiges computerlesbares Speichermedium, umfassend ein oder mehrere Programme zum Erzeugen einer Emoji-Sequenz-Identifikation (ID), die eine Wallet-Adresse einer Blockchain-Wallet identifiziert, wobei das eine oder mehrere Programme, wenn sie von einem oder mehreren Prozessoren ausgeführt werden, den einen oder mehrere Prozessoren veranlassen, Operationen durchzuführen, die umfassen:
Empfangen (202) der Wallet-Adresse für die Blockchain-Wallet, wobei die Wallet-Adresse eine vorbestimmte Anzahl von Bits umfasst;
Aufteilen (204) der vorbestimmten Anzahl von Bits der Wallet-Adresse in eine Mehrzahl von nicht überlappenden Gruppen von sequenziellen Bits;
Umwandeln (206) jeder Gruppe von sequenziellen Bits in eine jeweilige Emoji-ID basierend auf einer vorbestimmten Liste von Emojis, wobei die Emoji-ID eine vorbestimmte Anzahl von Emojis umfasst, die aus der Liste von Emojis ausgewählt sind, und wobei jede eindeutige Bitfolge in einer Gruppe auf eine eindeutige Emoji-ID mappt;
Verketten (208) der Emoji-ID für jede Gruppe von sequenziellen Bits zu einer Emoji-Sequenz; und
Ausgeben (210) der Emoji-Sequenz-ID, die die Wallet-Adresse basierend auf der Emoji-Sequenz identifiziert.

14. System zum Ableiten einer Wallet-Adresse für eine Blockchain-Wallet basierend auf einer Emoji-Sequenz-Identifikation (ID), die die Wallet-Adresse identifiziert, umfassend:
einen oder mehrere Prozessoren; einen Speicher, der einen lokalen Speicherplatz umfasst; und ein oder mehrere Programme, wobei das eine oder mehrere Programme in dem Speicher gespeichert und dazu ausgelegt sind, von dem einen oder den mehreren Prozessoren ausgeführt zu werden, wobei das eine oder mehrere Programme Anweisungen beinhalten, die den einen oder mehrere Prozessoren dazu veranlassen:
die Emoji-Sequenz-ID zu empfangen (302), die die Wallet-Adresse identifiziert, wobei die Emoji-Sequenz-ID eine Emoji-Sequenz mit einer vorbestimmten Anzahl von Emojis umfasst;
die vorbestimmte Anzahl von Emojis der Emoji-Sequenz in eine Mehrzahl von nicht überlappenden Gruppen von sequenziellen Emojis aufzuteilen (304);
jede Gruppe von sequenziellen Emojis in eine jeweilige Textrepräsentation umzuwandeln (306), die einer vorbestimmten Anzahl von Bits basierend auf einer vorbestimmten Liste von Emojis entspricht, wobei jedes Emoji in der Liste einem Wert zugeordnet ist, wobei jede eindeutige Sequenz von Emojis in einer Gruppe von Emojis auf eine eindeutige Zahl mappt, und wobei das Umwandeln umfasst:
Identifizieren (306A) einer Mehrzahl von Werten entsprechend einer Mehrzahl von Emojis in jeder Gruppe basierend auf der vorbestimmten Liste von Emojis, wobei jedes Emoji in jeder Gruppe von Emojis einem Emoji aus der vorbestimmten Liste von Emojis entspricht, und
Erzeugen (306B) einer Zahl, die der Textrepräsentation basierend auf der Mehrzahl der identifizierten Werte entspricht; und
die Textrepräsentation für jede Gruppe von sequenziellen Emojis zu einer Sequenz von Textrepräsentationen zu verketten (308), die die Wallet-Adresse identifiziert.

15. Nichtflüchtiges computerlesbares Speichermedium, umfassend ein oder mehrere Programme zum Ableiten einer Wallet-Adresse für eine Blockchain-Wallet basierend auf einer Emoji-Sequenz-Identifikation (ID), die die Wallet-Adresse identifiziert, wobei das eine oder mehrere Programme, wenn sie von einem oder mehreren Prozessoren ausgeführt werden, den einen oder mehrere Prozessoren veranlassen, Operationen durchzuführen, umfassend:
Empfangen (302) der Emoji-Sequenz-ID, die die Wallet-Adresse identifiziert, wobei die Emoji-Sequenz-ID eine Emoji-Sequenz mit einer vorbestimmten Anzahl von Emojis umfasst;
Aufteilen (304) der vorbestimmten Anzahl von Emojis der Emoji-Sequenz in eine Mehrzahl von nicht überlappenden Gruppen von sequenziellen Emojis;
Umwandeln (306) jeder Gruppe von sequenziellen Emojis in eine jeweilige Textrepräsentation, die einer vorbestimmten Anzahl von Bits basierend auf einer vorbestimmten Liste von Emojis entspricht, wobei jedes Emoji in der Liste einem Wert zugeordnet ist, wobei jede eindeutige Sequenz von Emojis in einer Gruppe von Emojis auf eine eindeutige Zahl mappt, und wobei das Umwandeln umfasst:
Identifizieren (306A) einer Mehrzahl von Werten entsprechend einer Mehrzahl von Emojis in jeder Gruppe basierend auf der vorbestimmten Liste von Emojis, wobei jedes Emoji in jeder Gruppe von Emojis einem Emoji aus der vorbestimmten Liste von Emojis entspricht, und
Erzeugen (306B) einer Zahl, die der Textrepräsentation basierend auf der Mehrzahl der identifizierten Werte entspricht; und
Verketten (308) der Textrepräsentation für jede Gruppe von sequenziellen Emojis zu einer Sequenz von Textrepräsentationen, die die Wallet-Adresse identifiziert.

## Revendications

1. Procédé de génération d'une identification (ID) de séquence d'émoticônes identifiant une adresse de portefeuille d'un portefeuille de chaînes de blocs, comprenant les étapes consistant à : recevoir (202) l'adresse de portefeuille pour le portefeuille de chaînes de blocs, l'adresse de portefeuille comprenant un nombre prédéterminé de bits ; diviser (204) le nombre prédéterminé de bits de l'adresse de portefeuille en une pluralité de groupes non chevauchants de bits séquentiels ; convertir (206) chaque groupe de bits séquentiels en une ID d'émoticône respective sur la base d'une liste prédéterminée d'émoticônes, l'ID d'émoticône comprenant un nombre prédéterminé d'émoticônes sélectionnées dans la liste d'émoticônes, et chaque séquence unique de bits dans un groupe correspondant à une ID d'émoticône unique ; concaténer (208) l'ID d'émoticône pour chaque groupe de bits séquentiels en une séquence d'émoticônes ; et délivrer en sortie (210) l'ID de séquence d'émoticônes identifiant l'adresse de portefeuille sur la base de la séquence d'émoticônes.

2. Procédé selon la revendication 1, dans lequel la liste d'émoticônes est stockée sous la forme d'une liste de caractères Unicode correspondants.

3. Procédé selon la revendication 1, dans lequel la liste d'émoticônes comprend une pluralité d'émoticônes sélectionnées à partir d'une norme Unicode.

4. Procédé selon la revendication 1, dans lequel la pluralité d'émoticônes sont associées à une pluralité de valeurs correspondantes.

5. Procédé selon la revendication 4, dans lequel la pluralité d'émoticônes sont stockées dans une matrice et la pluralité de valeurs sont une pluralité d'indices correspondants de la matrice ; ou
dans lequel chaque groupe de bits séquentiels correspond à un nombre qui est converti en un nombre prédéfini de valeurs correspondant au nombre prédéterminé d'émoticônes dans la représentation des émoticônes.

6. Procédé selon la revendication 3, dans lequel la pluralité d'émoticônes comprend une pluralité d'ensembles d'émoticônes qui sont picturalement similaires, et dans lequel chaque ensemble d'émoticônes qui est picturalement similaire se voit attribuer une valeur associée ; et, éventuellement ou de préférence, dans lequel un ensemble d'émoticônes qui est picturalement similaire comprend une pluralité d'émoticônes qui représentent des types du même objet.

7. Procédé selon la revendication 1, dans lequel le nombre prédéterminé de bits de l'adresse de portefeuille comprend une somme de contrôle représentée par une partie prédéfinie de l'adresse de portefeuille.

8. Procédé de dérivation d'une adresse de portefeuille pour un portefeuille de chaînes de blocs sur la base d'une identification (ID) de séquence d'émoticônes identifiant l'adresse de portefeuille, comprenant les étapes consistant à : recevoir (302) l'ID de séquence d'émoticônes identifiant l'adresse de portefeuille, l'ID de séquence d'émoticônes comprenant une séquence d'émoticônes ayant un nombre prédéterminé d'émoticônes ; diviser (304) le nombre prédéterminé d'émoticône de la séquence d'émoticônes en une pluralité de groupes non chevauchants d'émoticônes séquentielles ; convertir (306) chaque groupe d'émoticônes séquentielles en une représentation textuelle respective correspondant à un nombre prédéterminé de bits sur la base d'une liste prédéterminée d'émoticônes, chaque émoticône dans la liste étant associée à une valeur, chaque séquence unique d'émoticônes dans un groupe d'émoticônes correspondant à un numéro unique, et la conversion comprenant les étapes consistant à : identifier (306A) une pluralité de valeurs correspondant à une pluralité d'émoticônes dans chaque groupe sur la base de la liste prédéterminée d'émoticônes, chaque émoticône dans chaque groupe d'émoticônes correspondant à une émoticône de la liste prédéterminée d'émoticônes, et générer (306B) un nombre correspondant à la représentation textuelle sur la base de la pluralité de valeurs identifiées ; et concaténer (308) la représentation textuelle pour chaque groupe d'émoticônes séquentielles en une séquence de représentations textuelles qui identifie l'adresse de portefeuille.

9. Procédé selon la revendication 8, dans lequel la réception de l'ID de séquence d'émoticônes comprend les étapes consistant à : recevoir un code QR correspondant à l'adresse de portefeuille ; dériver la séquence d'émoticônes à partir du code QR ; et afficher la séquence d'émoticônes sous la forme de l'ID de séquence d'émoticônes de l'adresse de portefeuille, l'affichage de l'adresse de portefeuille sous la forme de la séquence d'émoticônes permettant à un utilisateur de vérifier picturalement l'adresse de portefeuille.

10. Procédé selon la revendication 8, dans lequel la réception de l'ID de séquence d'émoticônes comprend l'étape consistant à : recevoir la séquence d'émoticônes en provenance d'un presse-papiers stockant des objets copiés.

11. Procédé selon la revendication 8, dans lequel une partie prédéfinie de la séquence d'émoticônes correspond à une somme de contrôle permettant de vérifier l'ID de séquence d'émoticônes, et le procédé comprenant les étapes consistant à : extraire la partie prédéfinie de la séquence d'émoticônes pour générer une séquence résultante d'émoticônes, la partie prédéfinie comprenant une ou plusieurs émoticônes ; convertir la partie prédéfinie en une valeur de somme de contrôle sur la base de la liste prédéterminée d'émoticônes ; appliquer un algorithme de somme de contrôle pour calculer une valeur pour l'adresse de portefeuille sur la base de la séquence résultante d'émoticônes ; et déterminer si la valeur calculée correspond à la valeur de somme de contrôle ; et, éventuellement ou de préférence,
comprenant l'étape consistant à : en réponse à la détermination du fait que la valeur calculée ne correspond pas à la valeur de somme de contrôle, générer une notification indiquant que l'ID de séquence d'émoticônes pour l'adresse de portefeuille n'est pas valide.

12. Système de génération d'une identification (ID) de séquence d'émoticônes identifiant une adresse de portefeuille d'un portefeuille de chaînes de blocs, comprenant : un ou plusieurs processeurs ; une mémoire comprenant un stockage local ; et un ou plusieurs programmes, le ou les programmes étant stockés dans la mémoire et configurés pour être exécutés par le ou les processeurs, le ou les programmes comprenant des instructions qui amènent le ou les processeurs à : recevoir (202) l'adresse de portefeuille pour le portefeuille de chaînes de blocs, l'adresse de portefeuille comprenant un nombre prédéterminé de bits ; diviser (204) le nombre prédéterminé de bits de l'adresse de portefeuille en une pluralité de groupes non chevauchants de bits séquentiels ; convertir (206) chaque groupe de bits séquentiels en une ID d'émoticône respective sur la base d'une liste prédéterminée d'émoticônes, l'ID d'émoticône comprenant un nombre prédéterminé d'émoticônes sélectionnées dans la liste d'émoticônes, et chaque séquence unique de bits dans un groupe correspondant à une ID d'émoticône unique ; concaténer (208) l'ID d'émoticône pour chaque groupe de bits séquentiels en une séquence d'émoticônes ; et délivrer en sortie (210) l'ID de séquence d'émoticônes identifiant l'adresse de portefeuille sur la base de la séquence d'émoticônes.

13. Support de stockage non transitoire lisible par ordinateur comprenant un ou plusieurs programmes pour générer une identification (ID) de séquence d'émoticônes identifiant une adresse de portefeuille d'un portefeuille de chaînes de blocs, le ou les programmes, lorsqu'ils sont exécutés par un ou plusieurs processeurs, amenant le ou les processeurs à effectuer des opérations consistant à : recevoir (202) l'adresse de portefeuille pour le portefeuille de chaînes de blocs, l'adresse de portefeuille comprenant un nombre prédéterminé de bits ; diviser (204) le nombre prédéterminé de bits de l'adresse de portefeuille en une pluralité de groupes non chevauchants de bits séquentiels ; convertir (206) chaque groupe de bits séquentiels en une ID d'émoticône respective sur la base d'une liste prédéterminée d'émoticônes, l'ID d'émoticône comprenant un nombre prédéterminé d'émoticônes sélectionnées dans la liste d'émoticônes, et chaque séquence unique de bits dans un groupe correspondant à une ID d'émoticône unique ; concaténer (208) l'ID d'émoticône pour chaque groupe de bits séquentiels en une séquence d'émoticônes ; et délivrer en sortie (210) l'ID de séquence d'émoticônes identifiant l'adresse de portefeuille sur la base de la séquence d'émoticônes.

14. Système de dérivation d'une adresse de portefeuille pour un portefeuille de chaînes de blocs sur la base d'une identification (ID) de séquence d'émoticônes identifiant l'adresse de portefeuille, comprenant : un ou plusieurs processeurs ; une mémoire comprenant un stockage local ; et un ou plusieurs programmes, le ou les programmes étant stockés dans la mémoire et configurés pour être exécutés par le ou les processeurs, le ou les programmes comprenant des instructions qui amènent le ou les processeurs à : recevoir (302) l'ID de séquence d'émoticônes identifiant l'adresse de portefeuille, l'ID de séquence d'émoticônes comprenant une séquence d'émoticônes ayant un nombre prédéterminé d'émoticônes ; diviser (304) le nombre prédéterminé d'émoticône de la séquence d'émoticônes en une pluralité de groupes non chevauchants d'émoticônes séquentielles ; convertir (306) chaque groupe d'émoticônes séquentielles en une représentation textuelle respective correspondant à un nombre prédéterminé de bits sur la base d'une liste prédéterminée d'émoticônes, chaque émoticône dans la liste étant associée à une valeur, chaque séquence unique d'émoticônes dans un groupe d'émoticônes correspondant à un numéro unique, et la conversion comprenant les opérations consistant à : identifier (306A) une pluralité de valeurs correspondant à une pluralité d'émoticônes dans chaque groupe sur la base de la liste prédéterminée d'émoticônes, chaque émoticône dans chaque groupe d'émoticônes correspondant à une émoticône de la liste prédéterminée d'émoticônes, et générer (306B) un nombre correspondant à la représentation textuelle sur la base de la pluralité de valeurs identifiées ; et concaténer (308) la représentation textuelle pour chaque groupe d'émoticônes séquentielles en une séquence de représentations textuelles qui identifie l'adresse de portefeuille.

15. Support de stockage non transitoire lisible par ordinateur comprenant un ou plusieurs programmes pour dériver une adresse de portefeuille pour un portefeuille de chaînes de blocs sur la base d'une identification (ID) de séquence d'émoticônes identifiant l'adresse de portefeuille, le ou les programmes, lorsqu'ils sont exécutés par un ou plusieurs processeurs, amenant le ou les processeurs à effectuer des opérations consistant à : recevoir (302) l'ID de séquence d'émoticônes identifiant l'adresse de portefeuille, l'ID de séquence d'émoticônes comprenant une séquence d'émoticônes ayant un nombre prédéterminé d'émoticônes ; diviser (304) le nombre prédéterminé d'émoticône de la séquence d'émoticônes en une pluralité de groupes non chevauchants d'émoticônes séquentielles ; convertir (306) chaque groupe d'émoticônes séquentielles en une représentation textuelle respective correspondant à un nombre prédéterminé de bits sur la base d'une liste prédéterminée d'émoticônes, chaque émoticône dans la liste étant associée à une valeur, chaque séquence unique d'émoticônes dans un groupe d'émoticônes correspondant à un numéro unique, et la conversion comprenant les opérations consistant à : identifier (306A) une pluralité de valeurs correspondant à une pluralité d'émoticônes dans chaque groupe sur la base de la liste prédéterminée d'émoticônes, chaque émoticône dans chaque groupe d'émoticônes correspondant à une émoticône de la liste prédéterminée d'émoticônes, et générer (306B) un nombre correspondant à la représentation textuelle sur la base de la pluralité de valeurs identifiées ; et concaténer (308) la représentation textuelle pour chaque groupe d'émoticônes séquentielles en une séquence de représentations textuelles qui identifie l'adresse de portefeuille.
